# EUROPEAN PATENT APPLICATION

(11) **EP 4 040 057 A1**
(43) Date of publication of application: **10.08.2022**
(21) Application number: 20872238.9
(22) Date of filing: 17.09.2020
(51) Int. Cl.: F24F 6/10, B01D 53/26, F24F 3/14, F24F 6/00, F24F 11/89, F24F 13/20

(54) **HUMIDIFICATION UNIT**

(30) Priority: 30.09.2019 JP 2019178898
(71) Applicant: Daikin Industries, Ltd., Osaka-shi, Osaka 530-8323 (JP)
(72) Inventor: MIURA, Shu, Osaka-shi, Osaka 530-8323 (JP); EBINA, Hiroshi, Osaka-shi, Osaka 530-8323 (JP); TSUJI, Yoshiyuki, Osaka-shi, Osaka 530-8323 (JP); ONO, Takashi, Osaka-shi, Osaka 530-8323 (JP)
(74) Representative: Hoffmann Eitle
(86) International application number: PCT/JP2020/035194
(87) International publication number: WO 2021/065531

(57) **Abstract**

A humidifying unit 3 includes a casing 47 that has a first ventilation path P1 and a second ventilation path P2 through which air introduced from outside flows, a moisture absorbing material 41a that adsorbs moisture in the air flowing through the first ventilation path P1, releases the moisture to the air flowing through the second ventilation path P2, and humidifies the air, and a heater 42 that is provided in the casing 47 and heats the moisture absorbing material 41a or the air before humidification flowing through the second ventilation path P2. At least a part of the casing 47 is exposed to a target space S1.

## Description

### TECHNICAL FIELD

The present disclosure relates to a humidifying unit.

### BACKGROUND ART

Patent Literature 1 discloses a humidity control device that humidifies a room using a first flow path that discharges air introduced from outside to the outside and a second flow path that supplies air introduced from the outside to a room. The humidity control device is installed in an attic and includes a heater and a humidity control member. Air flowing through the first flow path is discharged to the outside after moisture in the air is absorbed by the humidity control member. Air flowing through the second flow path is heated by the heater, then humidified by the humidity control member, and supplied into the room.

### CITATION LIST

### [PATENT LITERATURE]

PATENT LITERATURE 1: Japanese Laid-Open Patent Publication No. 2006-170492

### SUMMARY OF THE INVENTION

### [TECHNICAL PROBLEM]

The humidity control device disclosed in Patent Literature 1 has a heater as a heating source that needs periodical inspection. However, there is a problem that it is difficult to inspect the heater because the humidity control device is installed in the attic.

An object of the present disclosure is to provide a humidifying unit of which heater is easily inspected.

### [SOLUTION TO PROBLEM]

(1) A humidifying unit according to the present disclosure is a humidifying unit that humidifies a target space, the humidifying unit including a casing having a first ventilation path and a second ventilation path through which air introduced from outside flows, a moisture absorbing material that adsorbs moisture in the air flowing through the first ventilation path, releases the moisture to the air flowing through the second ventilation path, and humidifies the air, and a heater that is provided in the casing and heats the moisture absorbing material or the air before humidification flowing through the second ventilation path, in which at least a part of the casing is exposed to the target space.
   In the humidifying unit configured as above, since at least a part of the casing is exposed to the target space, the heater in the casing can be easily inspected by accessing the heater from the target space.
(2) In the humidifying unit according to one aspect of the present disclosure, the heater heats the moisture absorbing material.
   This configuration can heat the moisture absorbing material efficiently.
(3) In the humidifying unit according to one aspect of the present disclosure, the heater is disposed upstream of the moisture absorbing material in the second ventilation path.
   In the humidifying unit configured as described above, the heater heats the air before humidification flowing through the second ventilation path. Since the moisture absorbing material is heated when the air heated by the heater passes through the moisture absorbing material, it is not necessary to directly heat the moisture absorbing material by the heater. Thus, the heater can be disposed away from the moisture absorbing material, and a degree of freedom in arrangement of the heater can be increased.
(4) In the humidifying unit according to one aspect of the present disclosure, the second ventilation path is configured to allow air before being heated by the heater to pass through the moisture absorbing material.
   In this configuration, the moisture absorbing material can be preliminarily cooled by the air before being heated by the heater.
(5) In the humidifying unit according to one aspect of the present disclosure, the moisture absorbing material rotates from the first region toward the second region, the first region allowing the air flowing through the first ventilation path to pass through and adsorbing moisture from the air, the second region allowing the air flowing through the second ventilation path to pass through and releasing moisture to the air.
   By rotating the moisture absorbing material in this configuration, it is possible to adsorb moisture in the air flowing through the first ventilation path in the first region and humidify the air flowing through the second ventilation path in the second region. Therefore, the humidifying unit can be made compact.
(6) The humidifying unit according to one aspect of the present disclosure further includes a first air supply duct that introduces outdoor air into the first ventilation path, and an exhaust duct that discharges air deprived of moisture by the moisture absorbing material from the first ventilation path to outside.
   In this configuration, the outdoor air is introduced into the first ventilation path from the first air supply duct and is deprived of moisture by the moisture absorbing material, and the air deprived of the moisture passes through the exhaust duct and is discharged to outside. As a result, the air deprived of moisture is not released to the target space, and the target space can be efficiently humidified.
(7) The humidifying unit according to one aspect of the present disclosure further includes a second air supply duct that introduces outdoor air into the second ventilation path, in which the casing has a release port that releases air humidified by the moisture absorbing material from the second ventilation path to the target space.
   In this configuration, the outdoor air is introduced into the second ventilation path from the second air supply duct and is humidified by the moisture absorbing material, and the humidified air is released from the release port of the casing to the target space. Thus, the target space can be humidified.
(8) In the humidifying unit according to one aspect of the present disclosure, the first air supply duct also serves as the second air supply duct.
   This configuration eliminates the need for separately providing the second air supply duct in the humidifying unit and simplifies the configuration of the humidifying unit.
(9) In the humidifying unit according to one aspect of the present disclosure, an opening is provided in at least a part of the casing exposed to the target space, and the opening is the release port.
   In this configuration, since the humidified air is released from the release port to the entire target space, a flap that adjusts a wind direction becomes unnecessary. This can simplify the configuration of the humidifying unit.
(10) In the humidifying unit according to one aspect of the present disclosure, the casing includes one air supply port that introduces outdoor air into the first ventilation path and the second ventilation path, an exhaust port through which the air deprived of moisture by the moisture absorbing material is discharged from the first ventilation path to outside, and a release port that releases the air humidified by the moisture absorbing material from the second ventilation path to the target space.
   In this configuration, air is introduced into the first ventilation path and the second ventilation path of the casing from the common air supply port. When the air is introduced, an air volume difference occurs between fans provided in the ventilation paths. It is therefore possible to distribute the air flow from the air supply port to the exhaust port via the first ventilation path and the air flow from the air supply port to the release port via the second ventilation path. This eliminates the need for a partition that distributes air from the air supply port to the first ventilation path and the second ventilation path and simplifies the configuration of the humidifying unit.
(11) The humidifying unit according to one aspect of the present disclosure further includes a humidity sensor that detects humidity of the target space.
   In this configuration, the humidity of the target space can be adjusted to a humidity desired by a user by operating the humidifying unit on the basis of a detection value of the humidity sensor.

### BRIEF DESCRIPTION OF DRAWINGS

FIG. 1 is a schematic diagram of a humidifying unit according to an embodiment.
FIG. 2 is an external perspective view of a casing body of the humidifying unit.
FIG. 3 is a schematic plan view of the casing body with a top panel removed.
FIG. 4 is a schematic sectional view of the casing body as viewed from a front side.
FIG. 5 is a plan view of a moisture absorbing rotor.
FIG. 6 is a perspective view of a heater.
FIG. 7 is a schematic diagram illustrating a modification of an air supply structure in the humidifying unit.

### DETAILED DESCRIPTION

Hereinafter, an embodiment of the present invention will be described with reference to the drawings.

### <Overall configuration of humidifying unit>

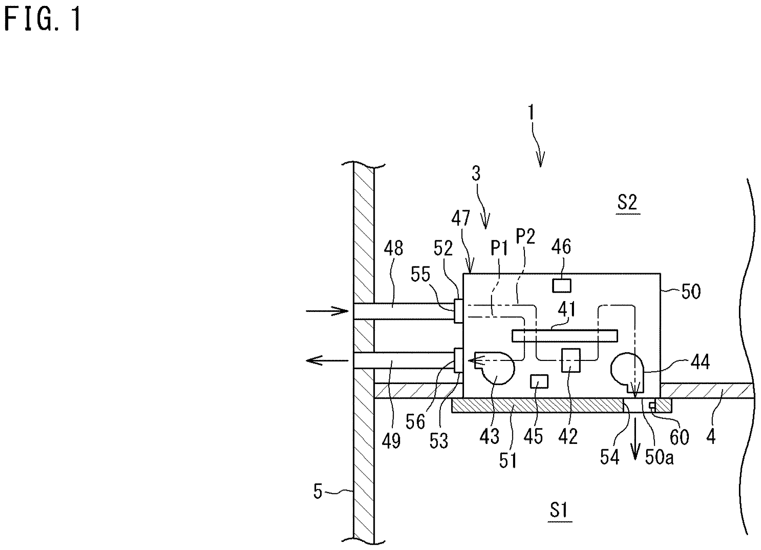

FIG. 1 is a schematic diagram of a humidifying unit according to the embodiment. A humidifying unit 3 humidifies and ventilates a target space S1. The target space S1 is, for example, a space in a room partitioned by a ceiling wall 4, a side wall 5, and a floor wall (not illustrated).

The humidifying unit 3 introduces and humidifies outdoor air, and releases the humidified air to the target space S1. The humidifying unit 3 includes a moisture absorbing rotor 41, a heater 42, a first fan 43, a second fan 44, a humidity sensor 45, a controller 46, a casing 47 accommodating the above devices 41 to 46, an air supply duct 48, and an exhaust duct 49.

The casing 47 includes a casing body 50, a panel 51, an air supply connection pipe 52, and an exhaust connection pipe 53.

Most of the casing body 50 is disposed in an attic space S2, and a lower end of the casing body 50 is disposed to penetrate the ceiling wall 4. The attic space S2 is a space formed above the ceiling wall 4.

The panel 51 is detachably attached to a lower surface of the casing body 50, and the entire panel 51 is exposed to the target space S1. The panel 51 is provided with an opening that communicates inside of the casing body 50 with the target space S1, and this opening serves as a release port 54 that releases air from the casing body 50 to the target space S1. The release port 54 is provided with a temperature and humidity sensor 60 that detects temperature and humidity of the air released from the release port 54. The release port 54 is not provided with a flap that adjusts a wind direction.

One end of the air supply connection pipe 52 and one end of the exhaust connection pipe 53 are disposed in the casing body 50. An opening on the other end of the air supply connection pipe 52 is an air supply port 55 that sucks outdoor air. An opening on the other end of the exhaust connection pipe 53 is an exhaust port 56 that discharges air to outdoor. The air supply port 55 and the exhaust port 56 may be constituted by openings formed in the wall surface of the casing body 50 without using the air supply connection pipe 52 and the exhaust connection pipe 53.

The casing 47 has a first ventilation path P1 and a second ventilation path P2 through which air introduced from the outside flows. The first ventilation path P1 is a ventilation path through which outdoor air is introduced into the casing body 50 from the air supply port 55 and flows to the exhaust port 56. The second ventilation path P2 is a ventilation path through which outdoor air is introduced into the casing body 50 from the air supply port 55 and flows to a communication port 50a (described later) in front of the release port 54. The casing 47 has a third ventilation path (not illustrated) that discharges the air in the target space S1 to the outside.

One end of the air supply duct 48 is connected to the air supply connection pipe 52 of the casing 47, and the other end of the air supply duct 48 penetrates the side wall 5 and communicates with the outside. The air supply duct 48 according to the embodiment also serves as a first air supply duct that introduces outdoor air from the air supply port 55 into the first ventilation path P1 and a second air supply duct that introduces outdoor air from the air supply port 55 into the second ventilation path P2.

One end of the exhaust duct 49 is connected to the exhaust connection pipe 53 of the casing 47, and the other end of the exhaust duct 49 penetrates the side wall 5 and communicates with the outside. As a result, the air flowing through the first ventilation path P1 is discharged from the exhaust port 56 to the outside through the exhaust duct 49.

The moisture absorbing rotor 41 is disposed in a midway of the first ventilation path P1 and in a midway of the second ventilation path P2. The moisture absorbing rotor 41 is configured to remove moisture from the air flowing through the first ventilation path P1 and release the moisture to the air flowing through the second ventilation path P2 to humidify the air. The heater 42 is provided in a midway of the second ventilation path P2 and heats air before humidification flowing through the second ventilation path P2. Detailed configurations of the moisture absorbing rotor 41 and the heater 42 will be described later.

The first fan 43 is disposed near the exhaust port 56 in the first ventilation path P1 and generates an air flow in the first ventilation path P1. Specifically, the first fan 43 is disposed at a position where outdoor air can be introduced into the first ventilation path P1 through the air supply duct 48 and at a position where air deprived of moisture by the moisture absorbing rotor 41 can be discharged to the outside through the exhaust duct 49.

The second fan 44 is disposed near the release port 54 in the second ventilation path P2 and generates an air flow in the second ventilation path P2. Specifically, the second fan 44 is disposed at a position where outdoor air can be introduced into the second ventilation path P2 through the air supply duct 48 and at a position where air humidified by the moisture absorbing rotor 41 can be released to the target space S1 from the release port 54.

The humidity sensor 45 is provided in the casing body 50 and detects humidity of the target space S1. A detection value of the humidity sensor 45 is output to the controller 46. The controller 46 controls the moisture absorbing rotor 41, the heater 42, the first fan 43, and the second fan 44 on the basis of the detection value of the humidity sensor 45 and the like.

The humidifying unit 3 performs a humidifying operation and a ventilation operation.

In the humidifying operation, the controller 46 drives the moisture absorbing rotor 41, the heater 42, the first fan 43, and the second fan 44. As a result, outdoor air passes through the air supply duct 48 and is introduced into the first ventilation path P1 and the second ventilation path P2 of the casing body 50. Moisture in the air introduced into the first ventilation path P1 is deprived of by the moisture absorbing rotor 41, and the air deprived of the moisture passes through the exhaust duct 49 and is discharged to the outside. Meanwhile, the air introduced into the second ventilation path P2 is humidified by the moisture absorbing rotor 41, and the humidified air is released from the release port 54 to the target space S1.

In the ventilation operation, the controller 46 drives the first fan 43, and the second fan 44 but does not drive the moisture absorbing rotor 41 and the heater 42. As a result, outdoor air passes through the air supply duct 48 and is introduced into the second ventilation path P2 of the casing body 50. The air introduced into the second ventilation path P2 is released from the release port 54 to the target space S1 without being humidified by the moisture absorbing rotor 41. At this time, an air volume of the released air from the release port 54 to the target space S1 is set to be larger than an air volume of the discharged air from the target space S1 to the outdoors because of the third ventilation path. Therefore, the inside of the target space S1 has a positive pressure due to the air released from the release port 54. As a result, the air in the target space S1 leaks out of the target space S1, and the target space S1 can be ventilated.

### <Casing body>

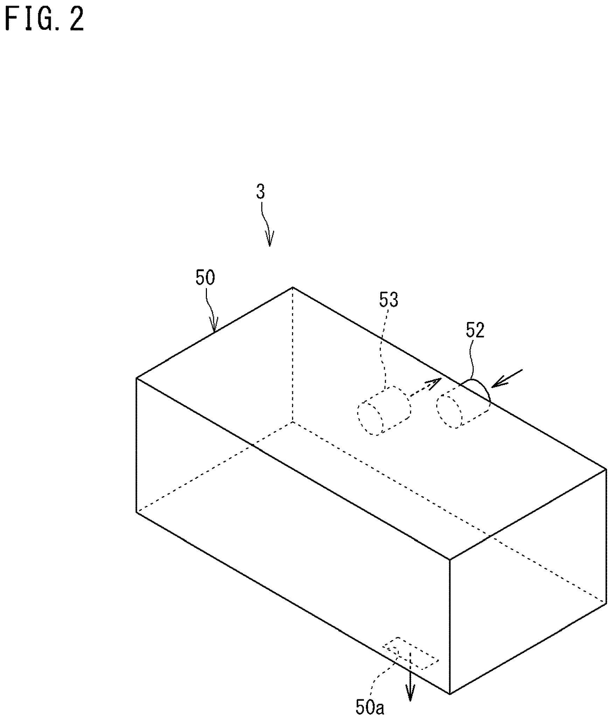

FIG. 2 is an external perspective view of the casing body 50 of the humidifying unit 3. The casing body 50 has a rectangular parallelepiped box shape. In the following description, "up", "down", "left", "right", "front", "rear", "front surface", and "back surface" mean directions when the casing body 50 shown in FIG. 2 is viewed from the front side (from the front left of the drawing) unless otherwise specified.

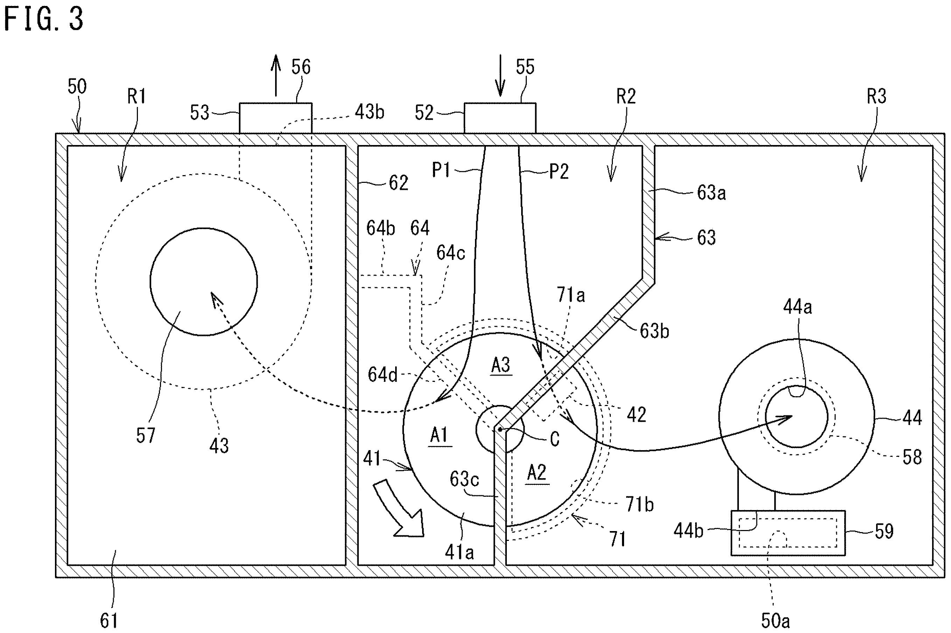

The air supply connection pipe 52 and the exhaust connection pipe 53 are provided on a back surface of the casing body 50. The communication port 50a is formed in a part of the lower surface of the casing body 50, and the communication port 50a communicates with the release port 54 (see FIG. 1) of the panel 51. The casing body 50 extends in a direction (left-right direction) horizontally orthogonal to a direction (front-rear direction) in which air enters and exits by the air supply connection pipe 52 and the exhaust connection pipe 53. In the casing body 50, devices such as the moisture absorbing rotor 41, the first fan 43, and the second fan 44 are disposed to be distributed to the left and right (see FIG. 3).

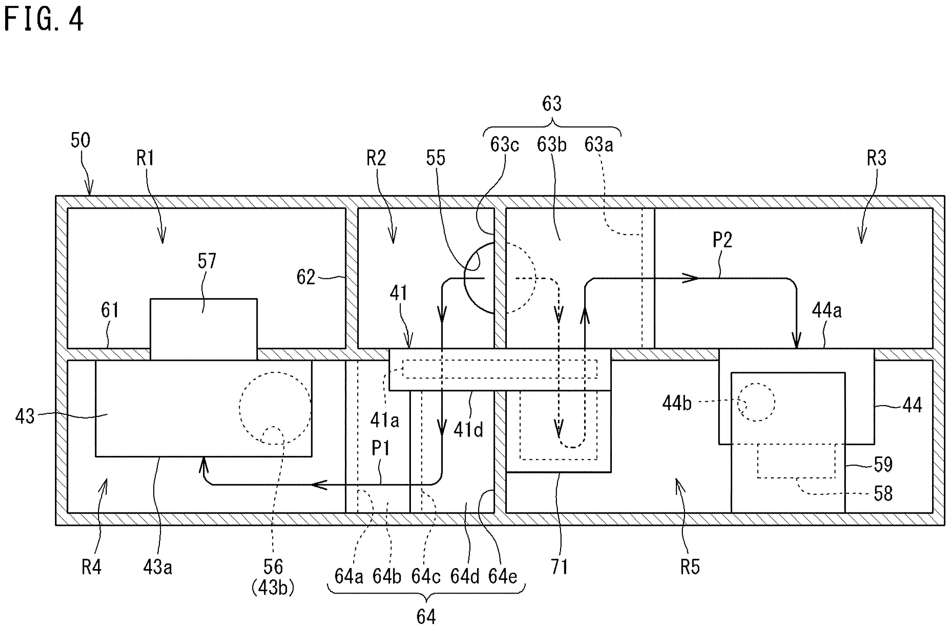

FIG. 3 is a schematic plan view of the casing body 50 with a top panel removed. FIG. 4 is a schematic sectional view of the casing body 50 as viewed from the front side. As shown in FIGS. 3 and 4, the casing body 50 is provided with a partition 61 that divides an internal space of the casing body 50 into two parts which are upper and lower parts. The casing body 50 is provided with partitions 62 and 63 that divide a space above the partition 61 into three parts of left and right, and a partition 64 that divides a space below the partition 61 into two parts.

The partition 63 has a pair of vertical plates 63a and 63c extending in the front-rear direction (up-down direction in FIG. 3) in plan view, and an inclined plate 63b connecting the vertical plates 63a and 63c. The partition 64 has vertical plates 64a, 64c, and 64e extending in the front-rear direction in plan view, a horizontal plate 64b connecting the vertical plates 64a and 64c, and an inclined plate 64d connecting the vertical plates 64c and 64e.

In the above configuration, the partitions 61 to 64 form a first space R1, a second space R2, a third space R3, a fourth space R4, and a fifth space R5 inside the casing body 50. The configuration that divides the internal space of the casing body 50 is not limited to the embodiment.

The air supply connection pipe 52 is provided at a position corresponding to the second space R2 on the back surface of the casing body 50, and the air supply port 55 of the air supply connection pipe 52 communicates with the second space R2. The exhaust connection pipe 53 is provided at a position corresponding to the fourth space R4 on the back surface of the casing body 50, and the exhaust port 56 of the exhaust connection pipe 53 communicates with the fourth space R4. The communication port 50a is formed at a position corresponding to the fifth space R5 on the lower surface of the casing body 50.

In the fourth space R4, the first fan 43 is provided on a lower surface of the partition 61. A suction port 43a that sucks air is formed on a lower surface of the first fan 43, and a blowout port 43b that blows out air is formed on a rear side of the first fan 43. The exhaust connection pipe 53 is connected to the blowout port 43b. In the first space R1, a first motor 57 that rotates the first fan 43 is disposed. The first motor 57 penetrates the partition 61, is connected to an upper part of the first fan 43, and rotates the first fan 43 with an air volume larger than an air volume of the second fan 44.

In the fifth space R5, the second fan 44 is provided on the partition 61. On an upper surface of the second fan 44, a suction port 44a that sucks air is formed. The suction port 44a penetrates the partition 61 and communicates with the third space R3. On a lower surface of the second fan 44, a second motor 58 that rotates the second fan 44 is disposed. A blowout port 44b through which air is blown out is formed on the front side of the second fan 44. The blowout port 44b is connected to a release duct 59 extending in the up-down direction in the fifth space R5 and having a quadrangular cross section. An upper end of the release duct 59 is closed. A lower end opening of the release duct 59 communicates with the communication port 50a of the casing body 50.

The moisture absorbing rotor 41 is disposed between the first fan 43 and the second fan 44 and penetrates the partition 61. The moisture absorbing rotor 41 is disposed below the inclined plate 63b and the vertical plate 63c of the partition 63 in plan view. The moisture absorbing rotor 41 is disposed above the inclined plate 64d and the vertical plate 64e of the partition 64 in plan view. In other words, the moisture absorbing rotor 41 is disposed across the second space R2 and the third space R3. The moisture absorbing rotor 41 is disposed across the fourth space R4 and the fifth space R5.

### <Moisture absorbing rotor>

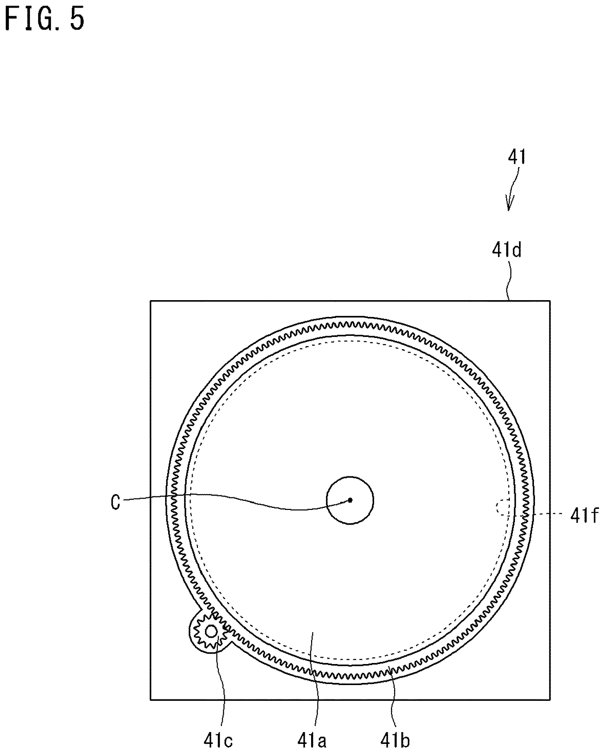

FIG. 5 is a plan view of the moisture absorbing rotor 41. The moisture absorbing rotor 41 has a moisture absorbing material 41a, a ring gear 41b, a pinion gear 41c, and a support frame 41d.

The moisture absorbing material 41a is a desiccant material having an annular shape. When the moisture absorbing material 41a has a low temperature, the moisture absorbing material 41a absorbs moisture from air when the air passes through the moisture absorbing material 41a. When the moisture absorbing material 41a has a high temperature, the moisture absorbing material 41a releases moisture to air and humidifies the air when the air passes through the moisture absorbing material 41a.

The ring gear 41b includes an external gear, and the moisture absorbing material 41a is fitted to an inner periphery of the external gear. Thus, the moisture absorbing material 41a and the ring gear 41b are integrated. The moisture absorbing material 41a and the ring gear 41b are disposed on the support frame 41d, and are rotatably supported with respect to the support frame 41d about a center axis C of the moisture absorbing material 41a. The support frame 41d is fixed to the partition 61 of the casing body 50. The support frame 41d is provided with a through hole 41f.

The pinion gear 41c is rotatably supported with respect to the support frame 41d on an outer periphery of the ring gear 41b, and meshes with the ring gear 41b. The pinion gear 41c is rotated by a motor (not illustrated). As a result, in response to the rotation of the pinion gear 41c, the moisture absorbing material 41a rotates about the center axis C together with the ring gear 41b. In the embodiment, the moisture absorbing material 41a rotates in one circumferential direction (a direction indicated by a white arrow in FIG. 3). Of the moisture absorbing rotor 41 in FIG. 3, only the moisture absorbing material 41a is illustrated.

As illustrated in FIGS. 3 and 4, the support frame 41d of the moisture absorbing rotor 41 is provided with a heater case 71 in the fifth space R5. The heater case 71 has a box shape and is disposed below the moisture absorbing rotor 41. An upper opening of the heater case 71 is covered and sealed with the support frame 41d. The heater case 71 is disposed in a 240° angular range from the vertical plate 64e (vertical plate 63c) to the inclined plate 64d about the center axis C in plan view.

In the heater case 71, the heater 42 is housed at a position below the inclined plate 63b. In the second ventilation path P2, the heater 42 is disposed downstream of a third region A3 (described later) and upstream of a second region A2 (described later). In FIG. 4, the heater 42 is not illustrated. In the heater case 71, a space formed closer to the inclined plate 64d than the heater 42 is a pre-heater space 71a into which air before being heated by the heater 42 is introduced. In the heater case 71, a space formed closer to the vertical plate 64e than the heater 42 is a post-heater space 71b into which air after being heated by heater 42 is introduced.

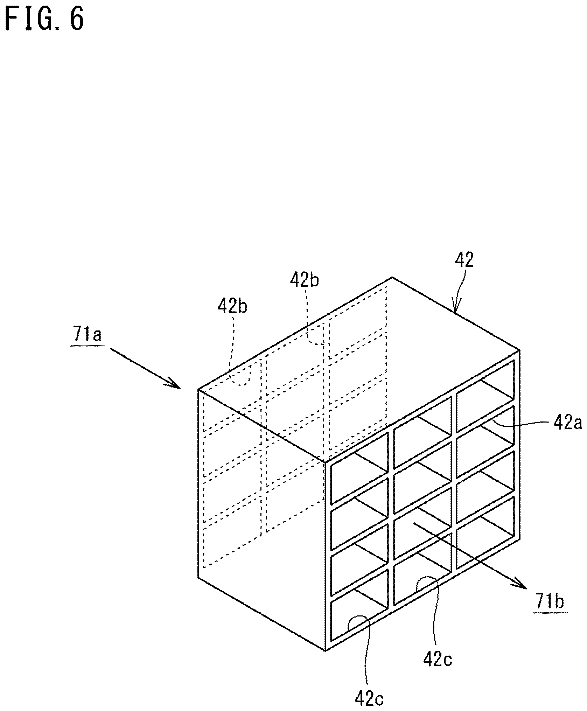

FIG. 6 is a perspective view of the heater 42. The heater 42 includes metal, for example, and has a quadrangular cross section. The heater 42 has a grid-like frame body 42a in order to increase a contact area with air passing through the inside thereof. One open end of the heater 42 is an inlet 42b for air, and the other open end of the heater 42 is an outlet 42c for air.

The heater 42 is disposed such that the inlet 42b faces the pre-heater space 71a and the outlet 42c faces the post-heater space 71b. The air in the pre-heater space 71a is introduced to the heated inside of the heater 42 from the inlet 42b, and is heated by being in contact with the frame body 42a and the like when passing through the inside of the heater 42. The heated air moves from the outlet 42c of the heater 42 to the post-heater space 71b, and heats the moisture absorbing material 41a located above the post-heater space 71b (see FIG. 3).

The heater 42 may directly heat the moisture absorbing material 41a instead of heating the air. In this case, for example, the heater 42 may be disposed above the moisture absorbing material 41a, and the moisture absorbing material 41a may be heated by radiant heat of the heater 42.

As illustrated in FIG. 3, the moisture absorbing rotor 41 is divided into a first region A1, the second region A2, and the third region A3 in plan view. The first region A1 is adjacent to the second region A2 and the third region A3. The second region A2 is adjacent to the first region A1 and the third region A3. The third region A3 is adjacent to the first region A1 and the second region A2. The moisture absorbing material 41a rotates from the first region A1 toward the second region A2. Specifically, the moisture absorbing material 41a rotates so as to pass through the first region A1, the second region A2, and the third region A3 in that order and return to the first region A1.

The first region A1 is formed in an angular range of 120° from the vertical plate 63c of the partition 63 to the inclined plate 64d of the partition 64. As a result, the first region A1 is interposed between the second space R2 and the fourth space R4. When outdoor cold air is introduced into the second space R2 from the air supply port 55, part of the air passes through the moisture absorbing material 41a in the first region A1 and moves to the fourth space R4. At this time, the moisture absorbing material 41a in the first region A1 is cooled by the air to have a lower temperature, and thus absorbs moisture in the air passing through the moisture absorbing material 41a. The moisture absorbing material 41a in the first region A1 rotates so as to move to the second region A2 adjacent to the first region A1 after adsorbing moisture in the air.

The second region A2 is formed in an angular range of 120° from the vertical plate 63c of the partition 63 to the inclined plate 63b of the partition 63. As a result, the second region A2 is interposed between the second space R2 and the post-heater space 71b of the heater case 71. In the heater case 71, the air heated by the heater 42 moves from the post-heater space 71b to the second space R2 through the moisture absorbing material 41a in the second region A2. At this time, the moisture absorbing material 41a in the second region A2 is heated by the air to have a higher temperature, and thud releases moisture to the air passing through the moisture absorbing material 41a.

The third region A3 is formed in an angular range of 120° from the inclined plate 63b of the partition 63 to the inclined plate 64d of the partition 64. As a result, the third region A3 is interposed between the second space R2 and the pre-heater space 71a of the heater case 71. When outdoor cold air is introduced into the second space R2 from the air supply port 55, part of the air passes through the moisture absorbing material 41a in the third region A3 and moves to the pre-heater space 71a. At this time, the moisture absorbing material 41a in the third region A3 is preliminarily cooled by the cold air. The cold air is preliminarily heated by the moisture absorbing material 41a. The third region A3 is not necessarily formed in the moisture absorbing rotor 41.

### <Ventilation path>

As illustrated in FIGS. 3 and 4, when the first fan 43 is driven, outdoor air is introduced into the second space R2 of the casing body 50 from the air supply port 55 of the air supply connection pipe 52. The air introduced into the second space R2 passes through the first region A1 of the moisture absorbing rotor 41, moves to the fourth space R4, and is discharged to the outside from the exhaust port 56 of the exhaust connection pipe 53 by the first fan 43.

Therefore, in the embodiment, an inner space of the air supply connection pipe 52, the second space R2, the fourth space R4, and an inner space of the air exhaust connection pipe 53 constitute the first ventilation path P1 through which air flows from the air supply port 55 to the exhaust port 56. The first region A1 of the moisture absorbing rotor 41 and the first fan 43 are disposed in a midway of the first ventilation path P1. The moisture absorbing material 41a of the moisture absorbing rotor 41 absorbs moisture in the air flowing through the first ventilation path P1 in the first region A1.

When the second fan 44 is driven during the humidifying operation, the outdoor air is introduced into the second space R2 of the casing body 50 from the air supply port 55 of the air supply connection pipe 52, passes through the third region A3 of the moisture absorbing rotor 41, and moves to the pre-heater space 71a of the heater case 71. The air that has moved to the pre-heater space 71a is heated by the heater 42 in the heater case 71, moves to the post-heater space 71b, passes through the second region A2 of the moisture absorbing rotor 41, and moves to the third space R3. The air that has moved to the third space R3 passes through the release duct 59 by the second fan 44, moves to the communication port 50a, and is released from the release port 54 of the panel 51 to the target space S1.

Therefore, in the embodiment, the inner space of the air supply connection pipe 52, the second space R2, the pre-heater space 71a, the post-heater space 71b, the third space R3, and an internal space of the release duct 59 constitute the second ventilation path P2 through which air flows from the air supply port 55 to the communication port 50a. The third region A3 and the second region A2 of the moisture absorbing rotor 41, the heater 42, and the second fan 44 are disposed in a midway of the second ventilation path P2.

In the second ventilation path P2, the moisture absorbing material 41a of the moisture absorbing rotor 41 is preliminarily cooled when the air before being heated by the heater 42 in the third region A3 passes through the moisture absorbing material 41a. The air heated by the heater 42 in the second region A2 passes through the moisture absorbing material 41a, and thus the moisture absorbing material 41a releases moisture into the air. As a result, the air passing through the moisture absorbing material 41a in the second region A2 is humidified.

During the humidifying operation, the air flowing through the first ventilation path P1 and the air flowing through the second ventilation path P2 both pass through the second space R2 as an identical space, but a partition that distributes both air is not provided in the second space R2. The reason is as follows. As described above, the first fan 43 is driven with an air volume larger than an air volume of the second fan 44 to make a difference in air suction force between the first fan 43 and the second fan 44. This is because the air is distributed to the first ventilation path P1 and the second ventilation path P2 due to the difference in suction force.

When the second fan 44 is driven during the ventilation operation, the outdoor air flows through the second ventilation path P2 similarly to the humidifying operation. However, since the first fan 43, the moisture absorbing rotor 41, and the heater 42 are not driven, the air flowing through the second ventilation path P2 is released from the release port 54 of the panel 51 into the target space S1 without being humidified by the moisture absorbing material 41a of the moisture absorbing rotor 41.

### <Functional effects of embodiment>

In the humidifying unit 3 according to the embodiment, since the panel 51 of the casing 47 is exposed to the target space S1, the heater 42 in the casing 47 can be easily inspected by accessing the heater 42 from the target space S1. Further, since the panel 51 is detachably attached to the casing body 50, detaching the panel 51 makes the heater 42 more accessible. This further facilitates the inspection of the heater 42.

In the second ventilation path P2, since the heater 42 is disposed upstream of the second region A2 of the moisture absorbing rotor 41, the heater 42 heats the air before humidification flowing through the second ventilation path P2.

When the air heated by the heater 42 passes through the moisture absorbing material 41a in the second region A2, the moisture absorbing material 41a is heated. This eliminates the need for directly heating the moisture absorbing material 41a by the heater 42, the heater 42 can be disposed away from the moisture absorbing material 41a, and a degree of freedom in arrangement of the heater 42 can be increased.

When the heater 42 directly heats the moisture absorbing material 41a, the moisture absorbing material 41a can be efficiently heated.

The second ventilation path P2 is formed in the third region A3 of the moisture absorbing rotor 41 so as to allow the air before being heated by the heater 42 to pass through the moisture absorbing material 41a. As a result, the moisture absorbing material 41a can be preliminarily cooled by the air before being heated by the heater 42.

The moisture absorbing material 41a rotates from the first region A1 toward the second region A2, the first region A1 allowing the air flowing through the first ventilation path P1 to pass through and adsorbing moisture from the air, the second region A2 allowing the air flowing through the second ventilation path P2 to pass through and releasing the moisture to the air. By rotating one moisture absorbing material 41a in this manner, it is possible to adsorb moisture in the air flowing through the first ventilation path P1 in the first region A1 and humidify the air flowing through the second ventilation path P2 in the second region A2. Therefore, the humidifying unit 3 can be made compact.

The outdoor air introduced into the first ventilation path P1 from the air supply duct 48 is deprived of moisture by the moisture absorbing material 41a, and the air deprived of the moisture passes through the exhaust duct 49 and is discharged to the outside. As a result, the air deprived of moisture is not released to the target space S1, and the target space S1 can be efficiently humidified.

The outdoor air introduced into the second ventilation path P2 from the air supply duct 48 is humidified by the moisture absorbing material 41a, and the humidified air is released from the release port 54 of the casing 47 to the target space S1. Thus, the target space S1 can be humidified.

The air supply duct 48 also serves as the first air supply duct that introduces outdoor air into the first ventilation path P1 and the second air supply duct that introduces outdoor air into the second ventilation path P2. As a result, the humidifying unit 3 does not need to separately include the second air supply duct, and this can simplify the configuration of the humidifying unit 3.

Since the air humidified in the second ventilation path P2 of the casing 47 is released to the entire target space S1 from the release port 54 as an opening formed in the panel 51, a flap that adjusts the wind direction becomes unnecessary. This can further simplify the configuration of the humidifying unit 3.

Air is introduced into the first ventilation path P1 and the second ventilation path P2 of the casing 47 from the common air supply port 55. At this time, an air volume difference occurs between the first fan 43 and the second fan 44 provided in the ventilation path P1 and the ventilation path P2, respectively. It is therefore possible to distribute the air flow from the air supply port 55 to the exhaust port 56 via the first ventilation path P1 and the air flow from the air supply port 55 to the release port 54 via the second ventilation path P2. This eliminates the need for a partition that distributes air from the air supply port 55 to the first ventilation path P1 and the second ventilation path P2 and further simplifies the configuration of the humidifying unit 3.

The humidifying unit 3, which includes the humidity sensor 45 detecting a humidity of the target space S1, can be operated on the basis of the detection value of the humidity sensor 45. As a result, the humidity of the target space S1 can be adjusted to a humidity desired by a user.

### <Modification>

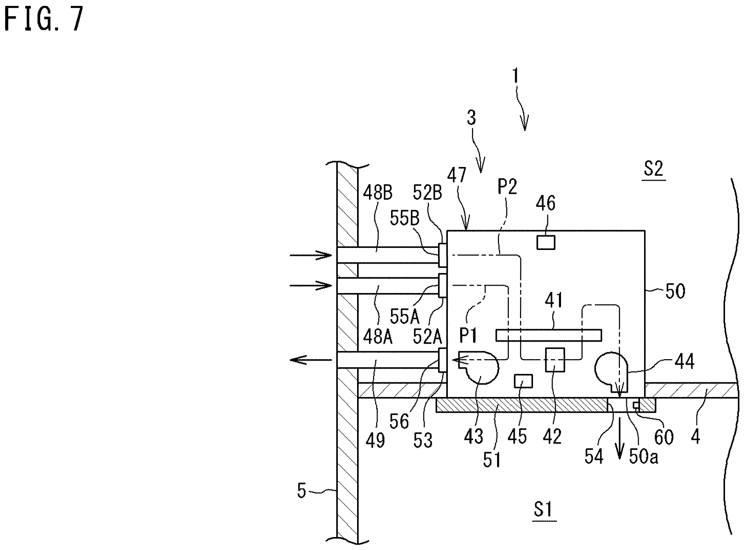

FIG. 7 is a schematic diagram illustrating a modification of an air supply structure in the humidifying unit 3. The air supply structure of the modification includes an air supply path dedicated to the first ventilation path P1 and an air supply path dedicated to the second ventilation path P2. Specifically, the humidifying unit 3 includes a first air supply connection pipe 52A, a second air supply connection pipe 52B, a first air supply duct 48A, and a second air supply duct 48B.

One end of the first air supply connection pipe 52A and one end of the second air supply connection pipe 52B are disposed in the casing body 50. An opening at the other end of the first air supply connection pipe 52A serves as a first air supply port 55A that sucks outdoor air into the first ventilation path P1. An opening at the other end of the second air supply connection pipe 52B serves as a second air supply port 55B that sucks outdoor air into the second ventilation path P2.

The first air supply duct 48A is an air supply duct that introduces outdoor air into the first ventilation path P1. One end of the first air supply duct 48A is connected to the first air supply connection pipe 52A, and the other end of the first air supply duct 48A penetrates the side wall 5 and communicates with the outside.

The second air supply duct 48B is an air supply duct that introduces outdoor air into the second ventilation path P2. One end of the second air supply duct 48B is connected to the second air supply connection pipe 52B, and the other end of the second air supply duct 48B penetrates the side wall 5 and communicates with the outside.

### <Other modifications>

The present disclosure should not be limited to the above exemplification, but is intended to include any modification recited in claims within meanings and a scope equivalent to those of the claims.

In the embodiment, the entire panel 51 of the casing 47 is exposed to the target space S1, but the disclosure is not limited thereto. For example, the casing body 50 and the panel 51 of the casing 47 may be disposed in the attic space S2, and only the release port 54 of the panel 51 may be exposed to the target space S1. When the casing 47 is disposed outside the side wall 5, a part of the casing body 50 may be exposed to the target space S1.

In the moisture absorbing rotor 41 according to the embodiment, the moisture absorbing material 41a is rotated by a gear mechanism including the ring gear 41b and the pinion gear 41c, but the moisture absorbing material 41a may be rotated by another rotation transmission mechanism such as a belt. Although the moisture absorbing material 41a is rotated, the moisture absorbing material 41a may be used without being rotated.

In the above embodiment, the humidity sensor 45 is provided in the humidifying unit 3, but may be provided at a location other than the humidifying unit 3, for example, on a wall surface of the side wall 5 facing the target space S1.

### REFERENCE SIGNS LIST

- 3: humidifying unit
- 7: control unit
- 14: temperature sensor
- 41a: moisture absorbing material
- 42: heater
- 45: humidity sensor
- 47: casing
- 48: air supply duct (first air supply duct, second air supply duct)
- 49: exhaust duct
- 54: release port (opening)
- A1: first region
- A2: second region
- P1: first ventilation path
- P2: second ventilation path
- S1: target space

## Claims

1. A humidifying unit that humidifies a target space (S1), the humidifying unit comprising:
a casing (47) having a first ventilation path (P1) and a second ventilation path (P2) through which air introduced from outside flows;
a moisture absorbing material (41a) that adsorbs moisture in the air flowing through the first ventilation path (P1), releases the moisture to the air flowing through the second ventilation path (P2), and humidifies the air; and
a heater (42) that is provided in the casing (47) and heats the moisture absorbing material (41a) or the air before humidification flowing through the second ventilation path (P2), wherein
at least a part of the casing (47) is exposed to the target space (S1).

2. The humidifying unit according to claim 1, wherein the heater (42) heats the moisture absorbing material (41a).

3. The humidifying unit according to claim 1, wherein the heater (42) is disposed upstream of the moisture absorbing material (41a) in the second ventilation path (P2).

4. The humidifying unit according to claim 3, wherein the second ventilation path (P2) is configured to allow air before being heated by the heater (42) to pass through the moisture absorbing material (41a).

5. The humidifying unit according to any one of claims 1 to 4, wherein the moisture absorbing material (41a) rotates from a first region (A1) toward a second region (A2), the first region (A1) allowing the air flowing through the first ventilation path (P1) to pass through and adsorbing moisture from the air, the second region (A2) allowing the air flowing through the second ventilation path (P2) to pass through and releasing the moisture to the air.

6. The humidifying unit according to any one of claims 1 to 5, further comprising:
a first air supply duct (48) that introduces outdoor air into the first ventilation path (P1); and
an exhaust duct (49) that discharges air deprived of moisture by the moisture absorbing material (41a) from the first ventilation path (P1) to outside.

7. The humidifying unit according to claim 6, further comprising a second air supply duct (48) that introduces outdoor air into the second ventilation path (P2), wherein
the casing (47) has a release port (54) that releases air humidified by the moisture absorbing material (41a) from the second ventilation path (P2) to the target space (S1).

8. The humidifying unit according to claim 7, wherein the first air supply duct (48) also serves as the second air supply duct (48).

9. The humidifying unit according to claim 7 or 8, wherein
an opening is provided in at least a part of the casing (47) exposed to the target space (S1), and
the opening is the release port (54).

10. The humidifying unit according to any one of claims 1 to 9, wherein
the casing (47) includes
one air supply port (55) that introduces outdoor air into the first ventilation path (P1) and the second ventilation path (P2),
an exhaust port (56) through which the air deprived of moisture by the moisture absorbing material (41a) is discharged from the first ventilation path (P1) to outside, and
a release port (54) that releases the air humidified by the moisture absorbing material (41a) from the second ventilation path (P2) to the target space (S1).

11. The humidifying unit according to any one of claims 1 to 10, further comprising a humidity sensor (45) that detects humidity of the target space (S1).
